(19)

Europäisches
Patentamt
European
Patent Office
Office européen
des brevets

(11) **EP 2 060 315 A2**

(12) **EUROPEAN PATENT APPLICATION**

(43) Date of publication:
20.05.2009 Bulletin 2009/21

(51) Int Cl.:
*B01D 67/00* (2006.01)   *B01D 69/12* (2006.01)

(21) Application number: **07022189.0**

(22) Date of filing: **15.11.2007**

(84) Designated Contracting States:
**AT BE BG CH CY CZ DE DK EE ES FI FR GB GR
HU IE IS IT LI LT LU LV MC MT NL PL PT RO SE
SI SK TR**
Designated Extension States:
**AL BA HR MK RS**

(71) Applicant: **DSM IP Assets B.V.**
**6411 TE  Heerlen (NL)**

(72) Inventors:
• **Qiu, Jun**
**6006 TS Weert (NL)**

• **Rulkens, Rudy**
**6269 CE Margraten (NL)**
• **Kamp, Op Den, Johannes Leonardus Maria**
**6191 GT Beek (NL)**
• **Thies, Jens Christoph**
**EH35JZ Edinburgh (GB)**

(74) Representative: **van der Ploeg, Antonius
Franciscus M.J. et al
DSM Intellectual Property,
P.O. Box 9
6160 MA  Geleen (NL)**

(54) **High performance membrane**

(57)    The present invention relates to a method for modifying a porous membrane, comprising steps wherein (a) a porous membrane carrier (A) having an open pore structure is impregnated with a solution (X) comprising a polymer (B-1) in a solvent (X-1) in which the polymer (B-1) is soluble, thus forming a porous membrane carrier impregnated with the polymer solution (X), and at least part of the polymer (B-1) comprised by the impregnated solution is precipitated from the solution by quenching with a liquid (Y) comprising a non-solvent (Y-1) for said polymer. The invention also relates to a microporous membrane comprising a porous membrane carrier (A) and a polymeric material (B) comprising a polycondensation polymer intimately divided throughout the porous membrane carrier, wherein the polymeric material comprises a polycondensation polymer, as well as to a process for preparing the said membrane and to the use thereof.

EP 2 060 315 A2

## Description

The invention relates to micro-porous or separation membranes, more particularly to hydrophilic micro-porous membranes and membranes for nano-filtration, ultra-filtration, and micro-filtration. The invention also relates to a process for preparing such micro-porous membranes and to use thereof in different constructions and applications. The invention further relates to a method for modifying one or more physical properties of a micro-porous membrane, meanwhile retaining, at least so in large extent, the basic structure and initial porosity or other physical properties of the micro-porous membrane at least so in large extent.

Membranes are commonly used for separation and concentration of solutions and suspensions. They have a broad application range and can be used in several molecular separation processes like micro filtration (MF), ultra filtration (UF), nano-filtration, reverse osmosis, electro-dialysis, electro-deionization, pertraction, pervaporation. Examples of applications include waste water purification, fuel cells, controlled release of pharmaceutical components, batteries and humidifiers. Generally, porous MF and UF membranes are broadly divided into hydrophilic membranes and hydrophobic membranes according to the natural properties of the material.

Most of the separation membranes are hydrophobic porous membranes made from hydrophobic materials like polyethylene (PE), polypropylene (PP), poly(vinylidene-difluoride) (PVDF), polytrifluorochloroethylene (PTFCE), polytetrafluoroethylene (PTFE), and polysulfone (PS). Hydrophobic porous membranes produced from thermoplastic polymers such as PP, PE, PTFE, and PVDF, are characterized by high elongation and high tensile strength, high chemical inertness and hydrolytical stability in low temperature aqueous media, while PS and PTFE are also quite thermo-stable. Polyolefins such as PE and PP however have limited thermal stability. Since the pore surfaces are hydrophobic, the wettability is low, and because of high capillary force in hydrophobic membrane pores a high pressure gradient is required to get water through the membrane, due to which these membranes are not suitable by themselves for water filtration. In addition, the hydrophobic surface is prone to fouling, compared to a hydrophilic one. In contrast to many hydrophilic polymers, many of the hydrophobic polymers are inherently hydrolytically stable.

Known examples of hydrophilic membranes include cellulose, cellulose derivatives like cellulose-acetate and cellulose nitrate, regenerated cellulose, nylons, polyvinyl alcohols, polyacrylic acid, polyethylene glycol, polyvinylpyrrolidone, polyvinylamine and the like. Hydrophilic porous membranes are characterized by the fact that, since the pore surfaces are hydrophilic, they are easily wettable with water, low fouling, and permit the filtration of aqueous solution without any special pretreatment. However, hydrophilic polymers generally have low mechanical strength with swelling, and low dimension stability, rendering (excluded of cellulose, cellulose derivates, and nylon) the production of a single standing membrane impossible. All of cellulose family membranes, however, are prone to degradation by enzymes. Nylon has inherent disadvantages as it is difficult to make highly porous sub-micrometer ultra-filtration membranes.

Hence, for a long time methods have been developed to render hydrophobic membranes hydrophilic, to improve the flux and maintaining stability. A number of methods are currently used to make hydrophobic membranes more hydrophilic in order to enable hydrophilic liquids including water to permeate there through. The methods include e.g. chemical surface modification plasma treatment, wetting treatment, coating treatment, and polymer blending.

In conventional methods, exposure to radiation or subjecting to plasma treatment (i.e., gas plasma treatment) is used to modify the chemical surface of hydrophobic membranes. U.S. Pat. 4,346,142; 5,085,775 and 5,294,346 describe the grafting of polyolefin membrane surface with hydrophilic monomers of acrylic acid by corona or plasma treated. However, both these chemical surface modification methods are disadvantageous. Whether a porous membrane is exposed to radiation or subjected to a plasma treatment, it is difficult to hydrophilize the membrane uniformly in the direction of its thickness. Plasma treatment generally is not able to modify the inside of membranes. If it is attempted to effect uniform hydrophilation over the entire thickness of a porous membrane which has a large thickness or is in the form of hollow fibres, e.g. by applying more intense radiation for attaining deeper penetration, the surface fibres and/or matrix of the porous membrane is unavoidably damaged or reduced in mechanical strength.

One of the wetting treatments for hydrophilation of porous polyolefin membranes is the organic solvent wetting and water substituting method in which the entire surfaces, inclusive of pore surfaces, of a porous polyolefin membrane are subjected to a wetting treatment with an organic solvent having good miscibility with water, such as an alcohol and ketone. The hydrophilic properties for these membranes are maintained only in the wet state, thus a permanent hydrophilic property is not achieved. The reason for this is that, once water is lost from pores during storages or use, the part having such water-free pores regains hydrophobicity and no longer permits the permeation of water there through. Therefore, it is necessary to keep water around the porous membrane at all times, making handling of the membranes troublesome.

To maintain the wettability, the membrane pores could be treated by a physical adsorption method in which a hydrophilic material such as polyethylene glycol or a surfactant is adsorbed on the surfaces of a porous membrane to impart hydrophilicity to the porous membrane. According to U.S, Pat. Nos. 4,525,374 and 4,839,296, a fluoropolymer membrane is impregnated with a mixture of solvent and surfactant. According to European Patent 175,322, a membrane is impregnated with a hydrophilic propylene glycol mono-fatty acid ester. The disadvantage of these methods of treatment is that the surfactant is washed out during the use of the membrane, especially at high temperatures. Although the physical adsorption method is simple in operation, the hydrophilic material may come off while the porous membrane is used for a long period of time. Therefore, this method cannot be regarded as a fully satisfactory hydrophilizing method. Moreover, if a porous membrane having such a hydrophilizing agent attached thereto is used for filtering or other purposes, the alcohol or surfactant migrates to and contaminates the purified water or aqueous mediums. Such leaching, in turn, may result in contamination of the filtrate. The intensive wash off the hydrophilizing agent thoroughly before use can be applied, which obviously increase the operation cost. This leaching is in practice unwanted in any medical application, such as dialysis, in any bio-separation process, such as antibody purification.

In another method, a coating based on hydrophilic acrylate monomers is applied or grafted on the pore surface of a hydrophobic polyolefin membrane. A solution of mono- and/or multifunctional acrylates in an alcohol or water impregnated in the membrane and subsequently polymerised by applying heat, while using a redox-radical initiator, see e.g. US4618533 or US7067058. These current methods have disadvantages. In case water is used as a solvent, the wetting capability is still limited; and it can be difficult to wet also small pores. In case alcohol is used as a solvent, wetting may be less of a problem, but the thermosetting polymerisation at higher temperature may cause the hydrophobic matrix shrinkage, resulting in porosity reduction, pore size narrowing and even pore blockage. As an alternative to thermally induced redox-radical initiated polymerization also UV-radiation induced grafting and polymerization is applied.

The concept of impregnating a solution of a precursor monomer and a redox initiator in a porous polyolefin membrane and subsequently polymerizing the precursor monomer at elevated temperature is also applied in EP-0495550-A2. EP-0495550-A2 uses specific pyroles, thiophenes and furans as precursor monomers to increase the temperature resistance of the porous membrane. The temperature at which the polymerization can be performed is compromised by the thermal stability of the polyolefin membrane.

It is also known from U.S. Pat. Nos. 4,298,002, and 4,908,236 that a micro-porous fluoropolymer membrane can be impregnated with a hydrophilic monomer and then polymerized. U.S. Pat. Nos. 4,113,912, 4,917,773, 4,618,533 and 4,506,035 describe impregnation of the fluoropolymer membrane with a hydrophilic monomer. Following impregnation, graft polymerization, crosslinking, a plasma treatment or a treatment with high energy radiation is performed for the purpose of fixation. However, it has been found that these methods lead to an irregular finish of the membrane and to an irregular crosslinking. In addition there is also the danger that the pores of a fluoropolymer membrane can become blocked. In Polymer Preprints 31 (1990) 1, M. S. Shoichet/T. J. McCarthy, U.S. Pat. No. 3,390,067 and European Patent 245,000, chemical pretreatment of the fluoropolymer surface with reducing reagents and then graft copolymerization are described. J. Appl. Polym. Sci., 26 (1990) 2637, E.-S. A. Hegazy, N. N. Taher, A. R. Ebaid and U.S. Pat. No. 4,734,112 describe pretreatment of a fluoropolymer membrane with plasma, laser or by glow discharge. This is followed by a chemical reaction with a hydrophilic substance. A disadvantage of hydrophilic applied coatings such as grafted PEO, polyacrylic acid, and PVP is that these require time before an equilibrium flux/selectivity has been obtained. Because this grafting is always not fully completed a lot of monomers and oligomers are washed out. A disadvantage of grafted PEO based systems is further the limited oxidative stability of PEO (cf. Mathias Ulbricht, Advanced functional polymer membranes, Polymer 47 (2006) 2217-2262).

These methods also lead to a loss of mechanical stability of the membrane and to a non-homogeneous modification of the area near the surface. These methods also have the disadvantage that the membrane has a reduced solvent stability and there is a loss of the hydrophilic character at elevated temperatures due to reorientation effects and thermal instability of the functional groups. European Patent Nos. 407,900 and 456,939 describe modification of a fluoropolymer membrane with a hydrophilic polymer and then chemical reaction of the hydrophilic groups. This method has the disadvantage that the membrane has a reduced solvent stability and there is a loss of the hydrophilic character at elevated temperatures due to reorientation effects and thermal instability of the functional groups. According to European Patent No. 408,378 and U.S. Pat. No. 4,113,912, a fluoropolymer membrane is rendered hydrophilic by treating it with a hydrophilic polymer and then completing this hydrophilic polymer with a complexing agent. Although hydrophilic membranes produced in this way have a stabilized modification, binding of the hydrophilic components is inadequate and there is the danger of inactivation due to loss of the finish. European Patent No. 436,720 describes the use of polyelectrolytes consisting of polycationic and polyanionic compounds that can impart hydrophilic properties to certain substrates. However, it has been found that these complexes yield completely inadequate adhesion to fluoropolymer membranes. Polyelectrolyte complexes are also disclosed in East German Patent Nos. 280,257 and 280,258 which can induce a cationic modification of substrates. Here again, the adhesion is inadequate.

For the production of porous membranes used in MF and UF applications different methods are applied, including solvent casting, unidirectional stretching for hollow tubes and unidirectional and biaxial stretching for films. Solvent casting or immersion casting is used for the majority of polymeric membranes. These membranes are cast in thin films with an asymmetric structure, typically with a thin active layer of some 20 $\mu$m and an open spongy support layer of about 100-200 $\mu$m thickness. This support layer is highly voided and these voids can extend through the thin active layer in the form of pinholes. This void penetration through the active barrier layer might affect the integrity of the membrane and result in loss of the desired solute selectivity. One approach to avoid this occasional defect is to increase the thickness of the active layer. However, the increased thickness sacrifices the permeability, and resulting in a lower productivity.

The stretching process is typically applied for semi-crystalline polymers, such as PE, PP, PTFE and, less frequently though, for PVDF. For this process, the membrane material can be formed into a nonporous hollow fibre or continuous film by various methods such as extruding or melt-spinning. The nonporous hollow fibre or film (often called a precursor) is then treated by a variety of processes which typically include annealing steps and stretching steps (typically at specified temperatures, rates of elongation, and total elongation) to produce pores within a desired size range in the fibres. The processes generally share a common strategy of providing a non-uniform composition with areas having a crystalline structure dispersed throughout the fibre or film. Upon stretching, the membrane material between the crystalline structures tears into a series of micro fibres alternating with elongated pores oriented along the length of the fibres. Such a stretching process is generally confined to a couple of highly crystalline polymers and typically results in porous membranes with small pores only. In praxis, this stretching process is restricted to hydrophobic polymers, as a result, the membrane is not appropriate for water filtration without any further hydrophilic modification.

In specific cases a combination of a coagulation process and a stretching process is applied. For example, EP-1233036-A1 describes porous polyamide membrane made by casting a solution of polymethaphenyle-isophthalamide, a semi-crystalline polyamide, in an amide solvent, coagulation in a non-solvent to form a porous and subsequent stretching of the porous film under specific conditions at elevated temperature and/or in contact with a coagulation liquid to obtain a porous film with sufficient mechanical properties and retention of porosity.

The formation of a polyamide based membrane by applying a solution of PA4,6 or PA4,6/6 and optionally PVP in formic acid onto a glass plate and contacting it with water as a non solvent, optionally after a short drying period is described by C. Lhommeau et al. in Journal of Material Science: Materials in Medicine 8 (1997), pp. 163-174. Without solvent evaporation a cellular morphology is formed that is very brittle. Only when solvent is allowed to evaporate partially, a non brittle membrane is formed due to the film formation at the surface of the polyamide.

Other micro-porous polymers are made by sintering of micro-porous polymer particles. However, it is difficult with such a technique to obtain a product with the narrow pore size distribution required for many applications. Moreover, the pores generally form through-paths running from the inner wall surface to the outer wall surface of the porous layer. This concept is used as support for separation filters, as well as gas/air cleaning filters for removal of small solid particles and dust.

In view of the above, there is need for porous membranes having improved properties, in particular combining a high porosity and/or a high flux with a high separation power under a defined pore sizes. Furthermore, there is a need for processes for the preparation of such membranes, and methods for modifying porous membranes, in particular methods that allow for further optimization of the overall balance in properties and/or better control over the pore size, e.g. for fine tuning the pore size of a micro-porous membrane, thereby fine-tuning the balance in permeability and separation power. In particular there is need for hydrophilic membranes having improved properties and /or hydrophobic membranes that can be made more hydrophilic, meanwhile maintaining stability and improving flux, in particular improving the hydrophilicity and flux for polar liquid based dispersions / mixtures and meanwhile retaining the intrinsic properties, such as chemical resistance, thermal stability, mechanical properties and/or dimensional stability.

Thus, the aim of the invention is to provide a method for modifying and/or improving membranes, for membranes having improved properties and for a process for making these membranes and which method, membranes and process do not have the above mentioned problems or in less extent.

This aim has been achieved with the method, the process and the micro-porous membranes according to the present invention.

The method according to the invention for modifying a membrane, as well as the process for preparing a micro-porous membrane, comprises steps wherein

(i) a porous membrane carrier having an open pore structure is impregnated with a polymer solution comprising a polymer in a solvent in which the polymer is soluble, and
(ii) at least part of the polymer comprised by the impregnated solution is precipitated from the solution by quenching with a liquid comprising a non-solvent for said polymer.

An advantage of this method is that it is possible to modify or improve one or more physical properties of a selected porous membrane, which is used as the porous membrane carrier, meanwhile retaining the basic structure and other physical properties of the porous membrane. The physical properties that can be modified by this method can be chosen from a very wide array, and can include, for example, the reduction of the pore size in a controlled manner, and/or the modification of a hydrophobic membrane into a hydrophilic membrane, and/or to increase the thermal stability and dimensional integrity at elevated temperature of a porous membrane. Also the mechanical strength can be improved. A further advantage is that the method is really simple and low cost. It can be performed, for example, at room temperature and/or at slightly elevated temperature e.g. when needed to enhance the solubility of the polymer, thus allowing to stay away from such highly elevated temperatures, which can effect the structural integrity of the porous membrane carrier.

After completion of the method, the basic structure of the porous membrane remains practically unaltered and intrinsic properties of the porous membrane, such as the mechanical properties are well retained. Furthermore, the pore size of the porous membrane can be reduced significantly, while the porosity of the resulting micro-porous membrane can be largely retained such that it is only slightly lower than the initial porosity of the porous membrane carrier. The method is in particular advantageous since it allows to start from a porous membrane selected, for example, for its specific or even unique structure, for example in terms of pore size distribution and/or layered structure, and for example to modify the surface properties of the inner surface of the pores and/or other physical properties of the membrane. For example, highly porous polyolefin based membranes, which are hydrophobic, can be modified into hydrophilic membranes while retaining in large extent the high porosity, and/or to increase the thermal stability thereof.

The micro-porous membrane obtained by the method according to the invention comprises the porous membrane carrier and a polymeric material intimately divided throughout the porous membrane carrier. The polymeric material may consist of polymer, being one polymer only or a blend of more than one polymers, or may comprise, next to the polymer, at least one other component.

The porous membrane carrier having an open pore structure is herein also denoted as porous membrane carrier (A). The polymer solution, the polymer and the solvent in which the polymer is soluble, are denoted respectively as polymer solution (X), polymer (B-1) and solvent (X-1). The non-solvent, in which said polymer (B-1) has a limited solubility or is insoluble and by which the polymer can be precipitated, is denoted herein as non-solvent (Y-1).

The polymeric material intimately divided throughout the porous membrane carrier is denoted herein as polymeric material (B). Irrespective of whether polymeric material (B) consists of the polymer (B-1) or comprises at least one other component, thus irrespective of whether or not there is another component present next to the polymer (B-1), the polymeric material is herein also denoted as polymer composition (B).

The method according to the invention can be applied for any micro-porous membrane or porous membrane carrier provided the porous membrane carrier has an open pore structure. The porous membrane carrier suitably is a micro-porous or sub-micron porous membrane, optionally even a nano-porous membrane, i.e. having pores in the range above, respectively below 1 micro-meter, or even in the range of around 1 to several nano-meters.

For enabling the micro-porous membrane (A) to be impregnated with the polymer solution (X), the polarity of the polymer solution can be adapted by the choice of the solvents to increase the affinity between the micro-porous membrane (A) and the polymer solution (X), while the impregnation might be advanced by lowering the viscosity of the solution and/or applying pressure. The viscosity of the solution might be lowered e.g. by choosing solvents that are better solvents for the polymer, by reducing or limiting the concentration of the polymer, by increasing the temperature of the solution and/or by reducing the molecular weight thereof. It has surprisingly been found that low viscous solutions with low polymer concentrations can be used thereby precipitating very low amounts of polymer, while already resulting in a significant change in properties of the porous membrane carrier.

The polymer precipitate, thus formed with the said method, is considered to have a microstructure intimately divided throughout the porous membrane carrier. This micro-structure is formed while at the same time the basic structure of the porous membrane remains practically unaltered. The precipitation occurs inside the pores of the membranes, thus likewise forming a thin coating layer on the complete internal surface of the pores and any fibrils of the porous membrane carrier as well as other micro- or nano-scale structural elements.

An essential requirement for the method according to the invention is that the porous membrane carrier (A) has an open pore structure to enable impregnation of the pores with the polymer solution (X). Otherwise the polymer could only be precipitated onto the surface of the porous membrane carrier (A), thus forming an external film rather than the microstructure intimately divided throughout the porous membrane carrier. It might be obvious that not all pores of the porous membrane carrier (A) need to be open, only those pores that need to be modified. In this respect it is also noted that the micro-structured material in the micro-porous membrane according to the invention is different from a coating layer on top of a porous membrane carrier as obtained by typical coating processes. Formation of an external film next to the "internal" microstructure is not excluded from the present invention. Such an external film might have pores itself as well, and furthermore, might be an integral part of a continuous structure together with the above described interpenetrating network. The continuous structure thus is not only continuous in the translational (x) direction and lateral (y) direction, but also in the transverse (z) direction of the membrane layer.

As a result of the method or process according to the invention, the precipitated or deposited material obtained by that method can be described as micro-structured material. Without being bound by any theory, it is interpreted that due to the compartmentalization of the impregnation and precipitation or deposition in the individual pores in the porous membrane carrier, and the entanglement of the precipitated polymeric material around the micro-fibrils of the porous membrane carrier is such that a micro-structured material is obtained which is well retained after further processing. For instance with a highly hydrophilic polymer such as a hydrophilic polyamide, which is not water soluble, washing with water does not lead to elution of the polyamide, despite the fact that the hydrophilic polymer is not chemically crosslinked or grafted onto the membrane carrier. Such a very good adhesion is highly surprising, in particular in view of other applications of such combinations of apolar polymers such as polyolefines, and polar polymers like polyamides, wherein tie layers, for example made of maleic acid anhydride modified polyolefines such as Yparex, are used to achieve adhesion between the said two materials.

With the terms "micro-structure" and "micro-structured" is herein understood that the intimately divided material B is more finely divided than just being big lumps and droplets. The polymer material (B) may be present as a nano-meter scale layer or coating covering the intimate structural elements of the porous membrane carrier (A), such as the fibrins and thin pore walls in a porous polyethylene film. The micro-structured material may likewise also consists of elements, such as fibrils, web, thin layers or film, which elements are considered to be linked to each other thereby forming a continuous structure. The micro-structured material having such a continuous structure thus can be considered as an interpenetrating network inside the membrane carrier. For example, the polymeric material (B) may consist of fibrils and small knots connecting different fibrils, for example similar like in non-woven fabrics, and/or of a nano-scale web, as has been observed for polyamide precipitated in a polyolefin membrane carrier, or of nano-meter scale thin layers or film, as observed for cellulose, precipitated in a polyolefin membrane carrier. The nano-scale film with cellulose means that the new membrane does not necessarily need to have a fully open pore structure anymore, and/or might have an open pore structure with much smaller pore size

The wordings "micro-structure" and "micro-structured" do not exclude that the impregnated and subsequently precipitated polymeric material has structural elements which are substantially smaller than micro-scale, or might even only consist of such smaller elements. Thus the wording micro-structure and micro-structured intends to describe the polymer structure as having elements with micron, sub-micron, and / or nano-scale dimensions.

It is noted that in contrast to the present invention, without the use of a porous membrane carrier, it would be impossible to make a micro-porous membrane having such a nano-scale microstructure, or if it would be obtainable at all, it would not suffer from mechanical integrity making it very difficult to handle and process.

The method according to the invention can in principle be applied to any type of porous membrane carrier, and to any combination of material (A-1) in the porous membrane carrier and polymer (B-1) in the polymer solution (X), and consequently constituting, or forming part of the polymeric material (B) in the resulting micro-porous membrane. The membrane carrier may for example be made of a polymeric material, or an inorganic material, such as a ceramic material, glass or metal. The polymer (B-1) can in principle be any polymeric material.

Preferably the membrane carrier is made of a polymeric material (A-1). Suitably, the polymeric material comprises one or more of the polymers mentioned herein further below. The polymer in polymeric material (A-1) and polymer (B-1) suitably comprise different polymers. The said polymers may be the same, provided that the porous membrane carrier remains practically unaltered during the impregnation and precipitation steps. Since the impregnation can be achieved in a very short time, and contacting with the quenching liquid to precipitate the polymer in the solution can be accomplished immediately thereafter, dissolution of polymer from the membrane carrier will be very limited if any, thereby retaining the membrane carrier.

The method wherein the polymer in polymeric material (A-1) and polymer (B-1) are the same can be advantageously applied for tuning the average pore size of a micro-porous membrane. By using a polymer B-1 being the same as to the polymer in polymeric material (A-1), the pore size may be altered without altering other properties, at most so in limited extent. By starting with a porous membrane carrier having an initial average pore size (PI), impregnating with a solution comprising the polymer in a predefined concentration, and precipitating the polymer, thereby obtaining a membrane with a resulting average pore sizes (PR), the resulting average pore size (PR) will be smaller than the initial average pore size (PI).

The same polymer means a polymer of the same polymer class or composition, but does not necessarily mean that the polymer must be identical in having the same properties in all aspects. Furthermore, the composition and material properties of polymeric material (B) might be different from those of polymeric material (A-1) and might be chosen in dependency to the impregnation process. Using a same material may be useful for modifying the pore size of the membrane carrier while retaining all other properties thereof.

Of course, the polymer in material (A-1) and polymer B-1 may as well be different. The method wherein material (A-1) and polymer (B-1) are different can advantageously be applied for fine-tuning the average pore size of a micro-porous membrane as well, or for modifying other properties of the micro-porous membrane, optionally combined with fine-tuning the average pore size of a micro-porous membrane.

Tuning of the pore size with the method according to the invention can also be combined by choosing membrane carriers with various pore sizes. By tuning the resulting average pore size (PR) through a selected combination of initial average pore size (PI) and type and amount of precipitated polymer (B-1), the desired flux and filtration level (micro-, ultra-, or nano-) of the resulting micro-porous membrane can be controlled.

The method according to the invention is in particularly suitable for modifying a membrane that is suitable for micro-fiftration, having an average pore size in the micrometer range (> 1 $\mu$m), into a membrane that is suitable for ultra- or nano-filtration. Such latter membranes, which need to have a very small pore size, in the nanometer range (< 1 $\mu$m), are otherwise hard to produce. The present method is very simple to be pursued and allows for a controlled reduction of the average pore size and in particular for reducing the average pore size from micrometer range (> 1 $\mu$m) to nanometer

range (< 1 $\mu$m).

The method is also very suitable for modifying a membrane having an average pore size in the micrometer range below 1 $\mu$m. For example, the initial pore size of the membrane carrier may be as low as 0.01 $\mu$m or even lower, but more suitably is 0.5 - 0.1 $\mu$m. Apart from further reducing the already small pore size, it can also be used to modify other properties of such sub-micron membranes, for example to make them even better suitable for ultra- or nano-filtration, and/or for particular fields of ultra- or nano-filtration.

The method is also, and in particular, suitable for modifying the affinity of a membrane for water, more particular for rendering a hydrophobic membrane more hydrophilic. This can be achieved by the method according to the invention wherein the polymer (B) is more hydrophilic than the polymeric material (A-1) of the porous membrane carrier. This can be achieved by the method wherein the porous membrane carrier is made of a hydrophobic material and the polymer (B) is more hydrophilic than the hydrophobic material.

Hydrophilicity, respectively hydrophobicity, is a relative material property. The hydrophilic character of a polymer can be determined by different methods available to the person skilled in the art. Surface tension is one such a method, water breakthrough pressure is another. As an ultimate test the water flux of a micro-porous membrane can be measured. The terms hydrophobic and hydrophilic are used herein as qualitative terms, in particular since an absolute borderline cannot be given, unless expressly stated otherwise.

Surface tension is one appropriate physical property generally used for distinguishing between hydrophilicity and hydrophobicity. The surface tension of a plastic is an important parameter for adhesion, which is technically significant for the capability to print on it, and for adhesive bonding, as well as for adjustment of adhesive and anti-adhesive properties. Surface tensions of polymers can be accurately determined by observing whether droplets of liquids spontaneously spread or not. The polymer surface tension will be higher than the surface tension of a liquid which spreads, and lower than that of a liquid which remains as a droplet. Young's equation describes the contact angle as a result of the force equilibrium between the surface tension in the solid and the liquid surface tension. This applies to smooth surfaces. In order to determine the surface tension of solids on the basis of this equation from contact angle measurements, an assumption has to be made about the interfacial tension between the solid and the liquid. There are various empirical models for this, each with their own strengths and weaknesses (Zisman's critical surface tension, state equation from Neumann et al., methods according to Owens-Wendt, according to Wu, and according to van Oss). In practice, the older method according to Wu and the newer one according to van Oss have become established for polymer surfaces, the latter probably describing the physical reality better. For practical reasons we stick here to surface tension values, determined using the WU method. As an illustration short list of polymeric materials and surface tensions, is given in the following Table 1, wherein $\delta$ represents the total surface tension, $\delta P$ the polarity contribution and $\delta H$ the hydrogen bonding contribution (source Fraunhofer IGB measurements: http://www.igb.fraunhofer.de/www/gf/grenzf/mem/gf-physik/en/GFphys-PolymOberfl.en.html).

Table 1: Polymeric materials and surface tensions

| Polymer | Surface ($\delta$) | tension ($\delta P$) | [mN/m] ($\delta H$) |
|---|---|---|---|
| PE | 36,1 | 35,3 | 0,8 |
| PTFE | 22,5* | 20,5 | 2,0 |
| PC | 46,7 | 44,4 | 2,3 |
| PVC | 38,4 | 34,2 | 4,2 |
| PS | 43,5 | 39,9 | 3,6 |
| PVDF | 33,7 | 24,5 | 9,2 |
| PET | 47,0 | 36,6 | 10,4 |
| PEEK | 46,0 | 35,0 | 11,0 |
| PMMA | 49,0 | 32,9 | 16,1 |
| PA66 | 42,5 | 24,0 | 18,5 |

In the method according to the invention for increasing the hydrophilicity of the micro-porous membrane, for the polymer (B) preferably a polymer is used that has a hydrogen contribution ($\delta H$) than the polymer in polymeric material (A-1).

A polymer being more hydrophilic than the material used for the porous membrane carrier is denoted herein as hydrophilic polymer. To render a hydrophobic membrane more hydrophilic with the method according to the invention, requires only a very low amount of hydrophilic polymer. By varying the amount of the hydrophilic polymer, the pore size can be controlled. By combination of the initial average pore size (PI), the type of polymer used and the amount of precipitated polymer, the resulting average pore size (PR) and water affinity advantageously can be tuned, and thus the desired flux and filtration level (micro-, ultra-, or nano-) can be controlled. More particularly advantageously, the method can be used for the preparation of membranes that have a high porosity in combination with a very small average pore size, meanwhile showing a relatively high water flux under low pressure gradient.

More preferably, in the method and the process according to the invention, and in the micro-porous membrane so obtained according to the invention, the polymeric material (A-1) is a hydrophobic material and the polymeric material, respectively the polymer (B-1) therein is a hydrophilic material. Analogously, preferably, the micro-porous membrane is hydrophilic while the porous membrane carrier used therein is hydrophobic. For this specific passage and the terms hydrophobic and hydrophilic are understood to have the following meaning. The polymer or the (micro)porous membrane is hydrophilic when droplets of water spontaneously spread out, while the same are considered to be hydrophobic, when the water droplets remain as a droplet.

Material A-1 and polymer B-1 suitably comprise or are the same or different polymeric materials, which polymeric materials might be any polymeric material suitable for making membranes or the modification thereof, such as biopolymers, thermoplastic polymers, natural and synthetic polymers, amorphous and semi-crystalline, as well as highly crystalline polymers.

The polymeric material (A-1) in the porous membrane carrier (A) may comprise any polymer, including hydrophilic and hydrophobic polymers. The said membrane might have been of a made polymeric material comprising a physical blend of different polymers, and/or might be a plasma treated membrane. Hydrophilic polymers that might be present as such or mixed with other polymers, and or plasma treated, include polyacrylamide, polyvinyl alcohols (PVA), polyacrylic acid (PAA), polyethylene glycol (PEO), polyvinylpyrrolidone (PVP), polyacrylamide, and polyvinylamine (PVAm).

Preferably, the polymer (A-1) comprises a polymer chosen from the group (a) consisting of polyolefins, halogenated vinyl polymers, polyacrylonitriles (PAN), polysulphones (PS), including polyether sulphones (PES), polyimides (PI), including polyetherimides (PEI), polycarbonates (PC), and cellulose and derivatives thereof, or any combination or blend thereof.

The polysulphone (PS) preferably is a polyether sulphone (PES). The polyimide (PI) preferably is a polyetherimide (PEI). Examples of suitable polyolefins are polyethylene (PE) and polypropylene (PP). Suitable halogen substituted vinyl polymers include polymers such poly(vinylidene-difluoride) (PVDF), polytrifluorochloroethylene (PTFCE), and polytetrafluoroethylene (PTFE).

More preferably, material A-1 is a hydrophobic material. The hydrophobic material preferably is a polyolefin, a halogenated vinyl polymer, or a polyether sulphones (PES). More preferably material A-1 comprises a polyolefin or PTFE, and most preferably a polyethylene (PE).

The hydrophobic polymer in the carrier material preferably comprises a PE, more preferably an ultra-high molecular weight polyethylene (UHMWPE). An UHMWPE or "ultrahigh" weight polyethylene is defined by a weight average molecular weight (Mw) of at least $0.5*10^8$ or $1*10^6$ or otherwise. Such porous materials are available under the trade Solupor (by DSM Solupor, the Netherlands).

Very suitably the UHMWPE based porous membrane carrier is a highly stretched UHMWPE and/or the UHMWPE is present therein in an amount of at least 20 weight-%, more preferably at least 50 weight-%, relative to the total weight of the carrier material, and / or the UHMWPE therein has an Mw in the range of 500,000 - 10,000,000 g/mol.

Polymer B-1, i.e. the polymer comprised by the solution impregnated in the membrane carrier and precipitated from that solution, and comprised by the polymeric material B in the resulting membrane, may comprise any soluble polymer. Suitably, polymer (B-1) is, and the polymeric material B-1 comprises, a thermoplastic polymer.

Preferably, polymer B-1 comprises a polymer chosen from the group (b) consisting of: PEEK, PEI, PES, PS, PC, polybenzimidazoles (PBI), polyesters, polyamides, thermoplastic elastomers (TPE), polyurea, polyurethanes (PU), natural polymers, or a combination or blend thereof.

Examples of suitable natural polymers include polyacetals and polyhemiacetals, such as cellulose and cellulose derivates (e.g. cellulose acetate and regenerated cellulose), silk, chitin, and chitosan

Examples of polyamides include polyaramides (more particular polyparaphyleneterephthalamides (PPTA), such as Kevlar), semi-aromatic polyamides and aliphatic polyamides.

The thermoplastic elastomers (TPE) can be for example a copolyamide elastomer (TPE-A) a copolyester elastomer (TPE-E), a polyurethane elastomer, or a polystyrene blockcopolymer (TPE-S),

More preferably, the polymer B-1 comprises or is a PPTA, PEEK, PI or PS polymer, since these polymers are thermally very stable and can protect less thermally stable membrane carriers, making these membranes suitable for use during sterilization process, during which these membranes do not deteriorate as well as much higher temperature.

Also preferably, the said polymer B-1 is a hydrophilic polymer, more preferably chosen from polyether blockcopolymers, polyamides and cellulose. Advantages of the combinations of the said hydrophobic carrier material and hydrophilic impregnated polymers are a combination of a high mechanical strength, good solvent resistance to both apolar and polar liquids, solubility of the mentioned polymers in solvents that penetrate into the hydrophobic material, good hydrolytic stability (especially for the polyamides), good oxidative stability. The resulting membranes show a very high water flux at very low water pressure.

Suitably, the cellulose is natural cellulose, a regenerated cellulose or a derivative thereof.

Suitable polyether block-copolymers are, for example, polyether esters, polyether amides, polyether urethanes, preferably polyether esters, polyether amides and more preferably polyether esters, polyether amides. Also preferably the polyether block-copolymers comprise polyether soft blocks comprising ethylene oxide units. Examples of such polyether block-copolymers are Arnitel polyether esters available from DSM the Netherlands, and PEBAX polyether amides available from Arkema.

Alternatively, the blockpolyamide copolymers and blockpolyester copolymers comprise soft blacks containing units derived from dimerized fatty acids with at least 16 carbon atoms. Such block copolymers have the advantage of even better adhesion to polyolefin carrier material.

More preferably, the hydrophilic polymer is a polyamide or a polyether block-copolymer, still more preferably a polyamide. Optionally this polyamide is dissolved into solvent X-1 together with up to 20% of another polymer, like for example polyvinylpyrrolidone (PVP).

The combination of membrane carrier made of hydrophobic polymers such as polyolefins, halogenated vinyl polymers, polysulphones (PS), and polyether sulphones (PES), with polyamides furthermore results in membranes that have a very good thermal, hydrolytic, thermo-oxidative, mechanical and dimensional stability.

Suitable polyamides are, for example, aromatic polyamides, semi-aromatic polyamides and aliphatic polyamides and any copolyamide thereof. The polyamides may be crystalline, liquid crystalline, semi-crystalline or amorphous. Suitable semi-aromatic polyamides include terephthalic acid based polyamides like PA6,T/6,6, PA9,T and PA6T/61, as well as PAMXD,6. Suitable aromatic polyamides are for example PPTA (commercial grades Kevlar, Twaron, Technora) or poly

Polyparaphyleneisophthalamides (PPIA) (commercial grades Nomex). The aliphatic polyamides may for example be chosen from PA2 (polyglycine), PA3, PA4, PA5, PA-6, PA2,6, PA2,8, PA-6,6, PA4,6 and PA610, and copolyamides like PA6/6,6, PA4,6/6. The copolyamide may be for example, a copolyamide of two or more aliphatic polyamides, or two or more aromatic or semi-aromatic polyamides, or combinations of one or more aliphatic polyamides and one or more aromatic or semi-aromatic polyamides. The polyamides may also be or comprise proteins like silk or keratin, as well as modified polyamides such as hindered phenol end capped PA.

Preferably the polyamide is a semi crystalline polyamide. The polyamide also preferably is an aliphatic polyamide, and apart from that preferably has a carbon / nitrogen ratio of at most 9. More preferably, the polyamide is a semi crystalline aliphatic polyamide having a C/N ratio of less than 9, still more preferably, the C/N ratio is in the range of 4 - 8. Suitably, said semi crystalline aliphatic polyamide is PA6, PA 6,6 or PA4,6, or a copolymer thereof, most preferably PA4,6. PA4,6 is a polyamide available under the trade name Stanyl from DSM, the Netherlands. The advantage of said preferred polyamides is that the resulting membrane has an improved hydrophilicity and higher water flux meanwhile showing improved mechanical properties and increased thermal stability.

The hydrophilic polymers can be combined with a hydrophobic carrier. Preferably the carrier is made of a polyolefin, a fluorinated vinyl polymer or a PES or PS. The embodiment of the membrane according to the invention with a polyolefin membrane carrier, in particular a polyolefin membrane carrier having a large tortuosity, and a hydrophilic polymer impregnated therein is highly suitable for use as depth filters, whereas the embodiment of the membrane according to the invention with a fluorinated vinyl polymer, PES or PS membrane carrier and a hydrophilic polymer impregnated therein is highly suitable for use as surface selective membrane.

The invention also relates to a micro-porous membrane. This micro-porous membrane comprises a porous membrane carrier (A) and a polymeric material (B) intimately divided throughout the porous membrane carrier.

The micro-porous membrane according to the invention may in principle be prepared by any method that is suitable for creating a micro-structured material intimately divided throughout a porous membrane carrier.

Suitably, the micro-porous membrane is prepared by using the method according to the invention described above. More particular, the membrane according to the invention can be prepared by a process comprising steps of:

(i) contacting a porous membrane carrier (A) having an open pore structure, with a solution (X) comprising a polymer (B-1), a solvent (X-1) in which the polymer is soluble, and optionally comprising at least one additional component, such that the solution X impregnates into the pore structure of the porous membrane carrier, and

(ii) quenching the porous membrane carrier with the impregnated solution X obtained from step (i) with a liquid (Y) comprising a non-solvent (Y-1) for said polymer, thereby precipitating at least part of the polymer.

The porous membrane carrier (A) typically consists of a porous carrier material (A-1), and the micro-structured material (B) consists of a polymeric material (B-1) as described above. The porous carrier material (A-1) may also be a polymeric material, and suitably that polymeric material may be the same as that of the micro-structured material (B), but preferably porous carrier material is different from the micro-structured material (B).

The carrier material does not need to comprise only polymeric components, or even not any polymeric component at all. As a matter of fact, the carrier material (A-1) may comprise, or even fully consist of an inorganic material.

Suitably the inorganic material comprises or consists of metal, ceramics or glass. Examples of suitable inorganic materials are zeolite, alumina, SiO2, zirconica (ZrO2).

Preferably, the carrier material (A-1) comprises at least a polymer and optionally at least one further component, optionally an inorganic component. Also suitably, the polymer in the porous carrier material (A-1) and polymeric material (B-1) are chosen from the groups (a-1) and (b-1) defined here above, or any preferred combination thereof as described hereabove.

An example of such a porous membrane carrier made of such a "filled" polymer composition, that can be used in the present invention, is Solufill, a polyolefin membrane filled with inorganic material of DSM, The Netherlands.

In a preferred embodiment of the micro-porous membrane according to the invention, the membrane is a hydrophilic membrane wherein the carrier material (A-1) is a hydrophobic material and the polymeric material (B-1) is a hydrophilic polymeric material or a hydrophilic / hydrophobic copolymer material. The advantage of the said combination, is that the resulting micro-porous membrane has a high water flux at very low water pressure, meanwhile showing other physical properties retained or even improved, such as retention of the mechanical strength from the hydrophobic membrane carrier and increased temperature stability from the impregnated polymer.

The hydrophilic / hydrophobic copolymer material suitably is a block-copolymer comprising blocks of hydrophilic polymer and blocks of hydrophobic polymer. Suitably, the block-copolymer is polyether ester elastomer as mentioned above.

In another preferred embodiment of the membrane according to the present invention, the polymeric material (B) comprises a polymer B-1, wherein the polymer B-1 is a polycondensation polymer. The polycondensation polymer suitably is chosen from the group consisting of polyhemiacetals, like cellulose and derivatives thereof, silk, chitin, chitosan polyesters, polyamides, polyaramides, thermoplastic elastomers, polyurea, polyurethanes, polyacetals, or a combination or blend thereof, preferably polyesters, polyamides, polyaramides, thermoplastic elastomers.

The polycondensation polymers have the advantage that the mechanical properties are increased, which will improve the resistance to back flushing and easily handling of the membrane during module building.

More preferably, the polycondensation polymer is a thermoplastic polymer, still more preferably a semi-crystalline thermoplastic polymer. Suitably, the semi-crystalline thermoplastic polymer comprises a polymer chosen from polyesters, polyamides, polyaramides, thermoplastic elastomers, preferably polyamides and thermoplastic elastomers. The polyamides and any preferred embodiments thereof that can be used, are described above.

Porous membranes made of polymeric material are restricted in their applicability by the properties of the polymers. This restriction may for instance originate from the softening point, and in particular the melting point of the polymers, above which the membranes lack desirable properties, such as dimensional stability, good mechanical properties and chemical resistance. Beyond the softening point, and in particular the melting point (Tm) of the polymers, which is denoted herein as TmB, the membranes tend to deform or shrink. In a preferred embodiment of the inventing the polymeric material (B-1) is an amorphous polymer having a glass transition temperature (TgB) being higher than TmA of the carrier material (A-1). Alternatively, the polymeric material (B-1) preferably is a semi-crystalline polymer having a melting temperature (TmB) being higher than the TmA of the carrier material (A-1). The advantage of the polymeric material (B-1) having a Tg or Tm being higher than the said TmA is that the micro-porous membrane has improved thermal and dimensional stability. A further advantage is that the membrane can be used at higher temperatures.

This is advantageously applied for example for membranes in battery separators which need a high dimensional stability, and in applications which need lack of deterioration during sterilization, such as sterilizable drug release plasters. For sterilization temperatures as high as 121°C for 30 minutes, or 135°C for 4 minutes, are applied. For this purpose the polymer martial B-1 advantageously comprises a high melting semi-crystalline polyamide or high thermal stable polymer such as PS or PES.

In the membrane according to the invention, the polymeric material (B-1) may be present in an amount varying over a large range. It has been observed that already very low amounts of polymeric material (B-1) can be used for the preparation of the membrane according to the invention and thereby affecting e.g. the surface properties thereof. Also relative large amounts can be used, for example when these are prepared from a highly porous carrier using any method according to the present invention. In such a case the concentration of the polymer in the polymer solution X can still be relatively low, allowing for a low viscosity and easy impregnation into the carrier.

Suitably, polymeric material (B-1) is present in an amount of 0.1 wt.% or lower, or as high as 40 wt.% or even higher, relative to the total weight of the membrane. Preferably, the amount of polymeric material (B-1) is at least 0.5 wt.%, more preferably in the range of 1-30 wt.%, more preferably 2-20, and most preferably 5-15 wt.%.

These preferred ranges in particular apply for membrane carriers made form a polymeric material. In case of an inorganic material as the membrane carrier, such as ceramic or glass, having a much higher specific weight, the preferred amounts of the polymeric material (B-1) are a factor 5 lower.

The advantage of a higher amount is that the pores become smaller. The higher the amount the better the surface coverage of the carrier material will be. With a hydrophobic carrier material (A-1) for example UHMWPE, and a hydrophilic polymeric material (B-1), also the flux will be higher. At a certain moment the increase in water flux will level off and subsequently decrease. This will result in a tailorable optimum combination of pore size and flux, which will depend on the materials used and the required properties, and which can be determined by the person skilled in the art of preparing membranes by routine testing and experiments.

The micro-porous membrane according to the invention may have a thickness varying over a large range. Suitably, the membrane has a thickness in the range of 5 - 500 $\mu$m, preferably 10 - 200 $\mu$m, more preferably 20-100 $\mu$m. The thickness may be selected at will, for example, in relation to the intended application and membrane selectivity.

The micro-porous membrane according to the invention may also have a porosity and pores varying over a large range. Suitably the porous membrane carrier has pores as low or even lower than 0.01 $\mu$m and/or as high as or even higher than 100 $\mu$m. Also suitably the porous membrane with an average pore size of at least 0.01 $\mu$m, preferably at least 0.1 $\mu$m, more preferably at least 1 $\mu$m, and/or wherein the average pore size is at most 20 $\mu$m, preferably at most 10 $\mu$m, more preferably at most 4 $\mu$m, prior to application of the polymer solution.

The micro-porous membrane typically has pores smaller than the porous membrane carrier and suitably has an average pore size of at least 1.0 nm, preferably at least 10 nm, more preferably at least 100 nm, and wherein the average pore size is at most 20 $\mu$m, preferably at most 10 $\mu$m, more preferably at most 1 $\mu$m lower.

The average pore size can be measured indirectly with air flow techniques via the air permeability, such as Gurley or Airflux. The method that is applied for the air permeability, and from which the values have been derived for average particle size values reported in this invention, is the Gurley test method according to ISO 5636-5. As a standard measuring set up a measuring area of 6.45 cm$^2$ (1 sq. inch) and a load of 567 grams is used, and the time needed for 50 ml of air to be permeated is measured. The air permeability thus measured is expressed in s/50ml, (wherein s = seconds and ml = millilitre). For micro-porous membranes with relative large pore sizes, for example with an average pore size of about 1 $\mu$m or more, the measuring area can be reduced, for example to 1 cm$^2$, and the volume of air to be permeated can be increased, for example 100 ml or 200 ml, to thus allowing the permeation time to be measured more accurately. The thus obtained measuring values can be recalculated to the corresponding value for the standard measuring set up, and also these modifications can be applied in accordance with ISO 5636-5. Further details are described in the experimental part further below. The relation between the Gurley (50 cc) number and air permeability is described in ISO 5636-5. The air permeability measured with Gurley, and expressed in s/50ml, can be translated via an empirical relation into pore size in $\mu$m, by dividing the number 1,77 by the Gurley number.

Also the porosity of the original membrane carrier and that of the resulting micro-porous membrane will differ, the latter typically having a lower porosity. An advantage of the micro-porous membrane according to the invention and the methods by which it can be prepared, is that the difference is limited, likewise due to the fact that the amount of polymeric material B-1 can be kept limited and the basic structure of the membrane carrier is largely retained during the preparation.

The porous membrane carrier suitably has a porosity of at least 40 volume %, preferably at least 60 volume %, more preferably in the range of 70 - 95 volume %, still more preferably in the range of 80 - 92 volume %, relative to the total volume of the membrane carrier.

Since the amount of polymeric material B is low and the membrane structure is hardly changed if any by the impregnation of the polymeric material B, the porosity of the micro-porous membrane is quite well retained and can still be very high, which is highly advantageous for obtaining high flux values. The porosity of the micro-porous membrane suitably is at least 30 volume %, preferably at least 50 volume %, more preferably in the range of 60 - 94 volume %, still more preferably 70 - 90 volume %, relative to the total volume of the membrane.

In a preferred embodiment of the micro-porous membrane according to the invention the porous membrane carrier (A) has pores with an average pore size of 0.01 - 10 $\mu$m and a porosity of at least 80 volume %, relative to the total volume of the membrane carrier, and the micro-porous membrane has an average pore size of 1 nm -1 $\mu$m and a porosity of at least 60 volume %, relative to the total volume of the micro-porous membrane.

The average pore size values mentioned hereabove are derived from Gurley values measured with the Gurley test method according to ISO 5636-5, expressed in s/50ml and converted into $\mu$m by 1.77 dividing by Gurley number.

In another preferred embodiment of the invention, the micro-porous membrane has an average pore size in the range of 0.01 -1.0 $\mu$m and a pure water flux of at least 3000 I/m$^4$.h.bar, more preferably at least 5000 I/m$^2$.h.bar, measured at 0.5 bar, based on dead-end measurements. Pure water is herein demineralised water.

The water flux has been measured by the method according to Norm ASTM F317-72, which is a standaard test method for the liquid flow rate of membrane filters.

This embodiment can be achieved for example with the micro-porous membrane according to the invention wherein the membrane carrier material (A-1) consists of a hydrophobic material such as a polyolefin and/or a halogenated vinyl polymer and the polymer (B-1) is a hydrophilic polyamide rendering the micro-porous membrane into a hydrophilic membrane.

Even more preferably, the membrane carrier material A-1 comprises UHMWPE, the polymeric material B-1 comprises a thermoplastic polyamide, and the micro-porous membrane has an average pore size of at most 200 nm, and the membrane exhibits a flux of 500 I/(m$^2$ h bar), preferably at least 1500 I/(m$^2$ h bar), (herein I = liter and h = hour) and even more preferably at least 3000 l/(m² h bar), at 1 bar pressure. The flux measurement herein is performed at 0.5 bar trans-membrane pressure, and converted in the corresponding value at 1 bar.

The micro-porous membrane according to the invention may advantageously comprise a polymeric material comprising at least one additive, preferably chosen from the group consisting of whiskers, pigments and dyes, nano-size active carbon, enzymes, pharmaceuticals, nutraceuticals, and ion exchange resins, pigments, antibacterial, and stabilizers, such as thermal and oxidation stabilizers.

The invention also relates to the process for preparing a micro-porous membrane comprising the steps described above of (a) contacting a porous membrane carrier having an open pore structure, with a solution (X) comprising a polymer and a solvent (X-1) in which the polymer is soluble, and optionally comprising at least one additional component, such that the solution X penetrates into the pore structure of the porous membrane carrier, and (b) quenching the porous membrane carrier with the penetrated solution X obtained from step (a) with a liquid (Y) comprising a solvent (Y-1) in which solvent Y-1 the polymer has a limited solubility or is insoluble, thereby precipitating at least part of the polymer.

It is noted herein that solvent X-1 is a solvent for the polymer, solvent Y-1 is as non-solvent for the polymer. The additional component that may be present in the solution may be, for example, an additive, or additives, like those mentioned here above, or a solubility enhancing component, such as an inorganic salt.

In the process according to the invention the solvent X-1 preferably comprises or is an organic solvent, being either polar or non-polar organic solvent, or any mixture thereof. More preferably the solution X comprises an organic solvent and an inorganic salt dissolved in the organic solvent. Also preferably the non-solvent Y-1 comprises water.

Whereas it is preferred to modify hydrophobic membranes into hydrophilic membranes, there are many polymers that are hydrophilic compared to the hydrophobic polymers used in the hydrophobic membranes, which hydrophilic polymers are soluble in organic solvents and not in water, and which are very suitable for use in the process according to the present invention.

Solvents that can be used as solvent X-1 and/or non-solvent Y-1 are both polar solvents, and non-polar solvents, which can used depending on the nature of the polymer.

Suitable apolar solvents include benzene, chloroform, and tetrachloroethylene.

Examples of polar solvents include low molecular weight liquids such as alcohols, amines, amino-alcohols, carboxylic acids, amides, amides, ketones and ethers. For the alcohols, solvents such as methanol, ethanol, isopropanol, phenol, cresols, ethylene glycol, propyleneglycol, 1,3-propanediol, butanediol can be used. For the amino-alcohols, or as an alternative name, alcohol amines, monoethanol amine and diethanolamine are suitable representatives. Suitable carboxylic acids are for example, formic acid, acetic acid, citric acid, benzoic acid, and oxalylic acid. For the amides, for example N-methyl-2-pyrrolidone (NMP), N,N-dimethylformamide (DMF), dimethylsulfoxide (DMSO), N,N-dimethylacetamide (DMAC), caprolactam can be used. Examples of possible ethers are tetrahydrofuran (THF), 1,4-dioxane and crown ethers. As ketones, for example methylethylketone or 2-butylketone (MEK) may be used. Also mixtures of the above polar solvents may be used, whereas acids and amides are preferably mixed with other solvents than with each others, since together acids and amides might form salts and thus might become unusable as a solvent. Also mixtures of polar solvents with the apolar solvents might be applied where applicable. The polar solvents may optionally also be combined with water.

For polymers like PS, PAN, PEI and cellulose, highly polar solvent such as N-methylpyrrolidone (NMP), dimethylformamide (DMF), dimethylsulfoxide (DMSO), dimethylacetamide (DMAC) can be used. For cellulose a preferred solvent medium is DMAC with LiCl or LiBr dissolved therein.

For polyamides a wide range of solvents may be used. Preferably, the solvents include amide based solvents, and alcohol solutions of inorganic salts. Suitable solvents for polyamides can be found, for example, in Nylon Plastics Handbuch, Melvin I Kohan, Hanser Publisher, Munich, 1995 (pages 63 and 82-84. Preferred solvents for the semi-aromatic and aliphatic polyamides are short chain aliphatic alcohols with 1-3 carbon atoms per OH functionallity, preferred because it can better dissolve polyamides and salts than longer aliphatic alcohols for example methanol, ethanol, and isopropanol, in particular the corresponding salt containing alcohol solutions, since these very well dissolve the polyamides, wet well the membrane carriers comprising apolar polymers and are fully miscible with water from which the polyamides precipitate.

Optionally the solvent can contain up to 30 wt.% of the non solvent Y-1. Specific advantage of Y-1 being water is that it is easier to keep the solutions without changing properties because of the hygroscopic behaviour of many solvents X-1 and the fact that water mixes well with the polyamide solvent X-1.

Salts that may be comprised by the solution suitable comprise one or more of the following cations Li$^+$, Na$^+$ Ca$^{+2}$, Mg$^{2+}$, Zn$^{2+}$, guanidinium$^+$, Al$^{3+}$, Fe$^{3+}$ and one or more of the following anions: F$^-$, Cl$^-$, Br$^-$, SCN$^-$, NO$_3^-$ SO$_4^{2-}$, and PO$_4^{3-}$. Preferably the salt comprise calcium chloride (CaCl2), lithium choride (LiCl), lithium nitrate (Li NO$_3$), and/or magnesium chloride (MgCl$_2$), more preferably LiCl or LiBr and CaCl$_2$ or CaBr$_2$, more preferably CaCl$_2$. Salts such as LiCl and CaCl$_2$ may suitably be dissolved in for example DMAC or methanol. CaCl2 is preferred because it is less poisonous than Li salts and is cheap.

Preferably, the alcohol has a water content between 0.01% and 5wt.%. The avoids problems due to the hygroscopic character of the alcohol and recycling by distillation.

In a preferred embodiment, the solution X comprises a salt, more preferably the salt concentration is high, still more preferably at least 70%, or better at least 80% or even 90%, relative to the saturation level. The advantage of a higher salt concentration is that the affinity for water increases and the water penetrates even faster in the impregnated membrane carrier. Additionally, the higher salt concentration will greatly reduce the volatility of organic solvent, which improves the safety on large scale production and better maintains the coating solution in a constant condition for a long interval. The higher salt concentration also favours the dissolution of polar polymers and allow for higher polymer concentrations or lower viscosities, thereby contributing to shortening the time needed for the impregnation. Moreover, the higher salt concentration will contribute to even better keep the open pore structure of the membrane.

Preferably, the solution (X) comprises a polar organic solvent and non-solvent Y-1 comprises water.

Polymer B-1 must be a soluble polymer and preferably is soluble in a solvent, in which material A-1 is insoluble or soluble in such limited extent that the porous membrane carrier remains practically unaltered during the impregnation and precipitation steps. It is clear that a polymer solution with too high a viscosity, due to too high a concentration and-or too high a molecular weight of the polymer B-1, will be difficult to impregnate into carrier A-1, and will result in a coating at the outer surface or surfaces of the porous membrane carrier rather than forming an intimately divided and micro-structured material inside the pores of the membrane carrier. The viscosity can be kept sufficiently low by limiting the molecular weight and the concentration of the polymer B-1 in the solution.

In another preferred embodiment of the invention, the polymer solution (X) comprises an alcohol, 0.1-30 wt.% water, 1-50 wt.% of a salt and 0.1-10 wt.% of a polyamide with a weight average molar mass (Mw) of 2 - 100 kg/mol. More preferably, this solution comprises either a short aliphatic alcohol with up to 3 carbon atoms, 5-20 wt.% water, 1-25 wt.% of $CaCl_2$ and/or $CaBr_2$, and/or 0.9-10 wt.% of a polyamide with C/N ratio is in the range of 4 - 8 with a weight average molar mass of 3 - 60 kg/mol. Even more preferably, the solution comprises all these elements together. Preferably, the polyamide herein is PA4,6 or PA4,6/6 or a copolymide of PA4,6 comprising at least 50 wt.% of PA4,6 units. It is noted that the weight percentatges (wt.%) herein are all are relative to the total weight of the polymer solution.

The polymer B-1 may have a molecular weight varying over a large range. To enhance solubility and processability polymer B-1 preferably has a weight average molecular weight (Mw) of at most 100.000, more preferably at most 50,000, and still more preferably at most 25,000. Polymer B-1 preferably has an Mw of at least 2,000, more preferably at least 3,000, and still more preferably at least 5,000. Very suitably, polymer B-1 has an Mw in the range of 10,000 - 20,000. A polymer B-1 with a higher minimum Mw is advantageous for the mechanical and thermal properties of the resulting membrane, and furthermore improves the retention during long standing filtrations. The preferred molecular weight will depend on the type of polymer. For example for polyamides, being relatively polar polymers with a tendency to form hydrogen bonds, the preferred molecular weights might be lower than for other, less polar polymers.

Suitably, the concentration of polymer B-1 in solution X is in the range of 0.1-10%, more preferably 0.2- 5%, still more preferably 0.5-2 wt.%, relative to the total weight of the polymer solution.

The temperature of the polymer solution and the liquid in the quench baths may be varied independently over a wide range, and suitably is between -20°C and 98°C, more preferably between 0°C and 60°C, or even between 10°C and 40°C, and most preferably 15°C to 25°C. In the preferred embodiments of the process described above, the liquid in the quenching bath suitably comprises water or mixtures of water and alcohol, more preferably methanol or ethanol and water, or even only water. In any case the temperature has to be above the freezing point of the liquids, thus in case the liquid in the quenching bath consists purely of water, this will be above 0°C.

The process may be accomplished in any way that is suitable for the required impregnation and sedimentation steps. The process may be a continuous process as well as a step-wise, semi-continuous, or batch process.

The process can be performed such that the porous membrane carrier (A) is soaked into an impregnation bath with the polymer solution (X), kept therein for a time sufficient long for being fully impregnated with the polymer solution (X), removed from the impregnation bath, and subsequently soaked into a quenching bath with the quenching liquid (Y) for a time sufficient long for the quenching liquid to be fully penetrated into the porous membrane carrier. The time of soaking needed for membrane carrier to be fully impregnated might be such that during soaking the membrane carrier is partly impregnated, while at the same time the membrane is wetted with an amount of the polymer solution, sufficient for the membrane carrier to become fully impregnated and which full impregnation is completed shortly after removal from the impregnation bath. Prior to soaking in the quenching bath one should take care that the membrane carrier is fully impregnated with the polymer solution (X). When mentioning hereabove of keeping porous membrane carrier (A) in the impregnation bath with the polymer solution (X) for a time sufficient long for being fully impregnated with the polymer solution (X), it is meant to include times sufficient long for the said wetting and subsequent full impregnation full of polymer solution (X).

The time needed for fully impregnation of the solution (X) and penetration of the quenching liquid (Y) can be established by the skilled person by routine experiments and measurements, for example by determining the weight increase of the porous membrane carrier (A) after the first soaking step, and full precipitation of the polymer. In practice it has been observed that for low viscous polymer solutions (X) in polar organic solvents it takes only a few to only tens of seconds to fully impregnate in a micro-porous polyolefine membrane. In case the polar organic solvent used is fully miscible with water, such as with alcohols, and in particular salt containing alcohol solutions, and using water as the quenching liquid, it also takes only a few to only tens of seconds to fully penetrate in the in the micro-porous membrane, even in case of a micro-porous polyolefine membrane.

Optionally after removing the impregnated membrane is kept in an air or other gas atmosphere for 0-10 minutes, preferably 0.1 to 7 minutes before contacting it with the non solvent. A minimum drying time has the advantage of a smoother surface while keeping the open structure inside of the membrane. This can have positive effect on minimizing protein growth for biomedical applications.

Suitably, the process is a continuous or semi-continuous process, wherein the porous membrane carrier is unwinded from a first roll, optionally passed through a wetting unit, passed through a solution application unit comprising the solution $X$, passed through a quenching unit comprising the quenching liquid Y, passed through a washing and/or drying unit and/or annealing, and wherein the resulting micro-porous membrane is rewound on a second roll. Likewise throughout such a continuous process the composition of the quenching liquid might change due to a gradual increase in solvent components from solution X. Replenishment of fresh quenching liquid can likewise be performed throughout the process.

Alternatively, the process may be a batch process, wherein sheets or stacks of sheets of the porous membrane carrier are soaked in a first bath comprising the solution X, taken from the first bath and soaked into a second bath comprising the non-solvent Y-1.

In the situation wherein the porous membrane carrier and the resulting micro-porous membrane have the shape of a hollow fibre, the porous membrane carrier of the continuous process and the sheets and stacks of the batch process may be replaced by the fibre or fibres of the hollow porous membrane carrier.

For hollow fibres and tubular membranes, the impregnating solution can pass through the inside of the fibres, while the quenching solution is applied to the outside of fibres, or in the opposite way. While this impregnation can be performed from bore side or shell side, the quenching solution can flow from both sides too.

The porous membrane carrier used in the process may have a surface average weight varying over a large range and also the amount of polymeric material to be precipitated on the porous membrane carrier may vary over a large range. For example some PES and PS membranes are quite thick, for example more than 200 $\mu$m, and might even comprise a polyester sub-layer to increase mechanic strength.

The porous membrane carrier may have, for example, a surface average weight in the range of 5 - 300g/m2, preferably 10-200 g/m2, more preferably 20-100 g/m2. The amount of polymeric material precipitated on the porous membrane carrier and remained after an optional washing and drying step, suitably is in the range of 0.1 - 20 g/m$^2$, preferably 0.5-10 g/m$^2$, more preferably 0.5 - 5 g/m$^2$.

The amount of polymeric material precipitated and remained may be as high as or even higher than 50 wt.%, relative to the total weight of the membrane. Preferably, amount is in the range of 1 - 30 wt.% preferably 2-20, more preferably 5-10 wt.%, relative to the total weight of the membrane.

The process according to the invention may comprise a further step, or further steps, wherein the impregnated and quenched membrane obtained from step (a) and (b) is either washed (e.g. rinsed with water), dyed, dried, stretched, annealed, or calandered, or any combination thereof.

The invention also relates to a membrane construction. In one embodiment the membrane construction comprises a thin micro-porous membrane film, optionally folded, wound and / or supported by a support layer, wherein the thin micro-porous membrane film consists of a micro-porous membrane according to the present invention, or any preferred embodiment thereof. The support layer can be a web or coating layer; which can e.g. be used to further enhance the mechanical properties. The micro-structured material B can contribute to the adhesion between the membrane and support layer, thereby eliminating the need of a separate adhesive, and avoiding reduction of the permeability of the membrane. The construction with a coating layer might be semi-permeable and might be used for e.g. gas separation, reverse osmosis.

In a second embodiment the membrane construction comprises a hollow membrane fibre, or a bundle of multiple hollow membrane fibres, wherein the hollow membrane fibre or fibres consist of a micro-porous membrane according to the present invention, or any preferred embodiment thereof.

The possibility of fine tuning the pore size of the micro-porous membrane and/or changing the hydrophobic nature into a hydrophilic one, and attaining high water flux, as well as endless choice of polymers for the modification, the possible use of additives and making various construction open up many applications varying over a wide range for the micro-porous membranes according to the invention.

The invention also relates to the use of a membrane according to the present invention, or any preferred embodiment thereof, or obtained by any process or method according to the invention, or any membrane construction made thereof for any of the following applications:

- molecular separations, like particle filtration, micro filtration, ultra filtration, nano-filtration, reverse osmosis, and including solvent resistant nanofiltration(SR-NF) or any solvent resistant filtration.

- gas/gas filtration
- waste water purification,
- electrochemical applications, including electro-dialysis, electro-deionization, batteries and fuel cells
- controlled release applications including pharmaceutical and nutraceutical components.
- pertraction, pervaporation and contactor applications.
- Immobilization of enzymes,
- and humidifiers
- biocompatible membranes (for example cell macroencapsulation membranes for example for the encapsulation of islets of Langerhans).

Membranes are commonly used for separation and concentration of solutions and suspensions. They have a broad application range and can be used in several molecular separation processes like micro filtration (MF), ultra filtration (UF), nano-filtration, reverse osmosis, electro-dialysis, electro-deionization, pertraction, pervaporation. Examples of applications include waste water purification, fuel cells, controlled release of pharmaceutical components, batteries and humidifiers. Generally, porous MF and UF membranes are broadly divided into hydrophilic membranes and hydrophobic membranes according to the natural properties of the material.

The invention is further elucidated with the following examples and comparative experiments.

Test Methods

Water permeability

The water permeability was measured with the method according to ASTM F317-72 at room temperature (20°C) at a pressure gradient across the membrane of 500 mbar. 250 ml water is passed through the membrane under this pressure. The time elapsed for each 50 ml in the permeate side is recorded. Thereafter, the water flux is calculated according to the equation 1

$$J = Q / AtP \qquad (eq\ 1)$$

in which J is the flux ($l/m^2$ h bar), Q is the amount of water (in litre) flowing through the membrane in the time period (t) of the measurement (in hours), A is the effective area of the membrane ($m^2$), and P is the pressure difference through the membrane. The experiment is performed in five replicates, the five measurements are averaged, and the average value is reported.

Air permeability

The air permeability was measured with the Gurley test method according to ISO 5636-5. For the measurements, a Gurley Densometer type B from Toyoseiki was used, with a recording the time in 0.1 seconds, with a cylinder capacity of 50 milliliters, a cylinder weight of 567 gram and a measuring surface of 6.45 square centimetre (1 square inch), and calibrated according to standard procedures.

The measurements for the individual materials was performed as follows: a strip of a membrane was cut across the width of the roll. A smooth, undamaged test specimen was placed over the clamping plate orifice and clamped. The measurement was started, and the time required for 50 milliliters of air to pass through the test specimen was determined. The test was repeated 5 times and the (average) Gurley value was recorded in seconds/50ml.

Average pore size.

The average pore size was calculated by dividing the number 1.77 by the Gurley value.

Porosity measurement

The porosity is calculated using the following equation (I):

$$porosity = \frac{\rho - \left( \dfrac{base\ weight}{thickness} \right)}{\rho} \times 100\%$$  (I)

wherein:

$\rho$ = Density of the micro porous polymeric matrix in $g/cm^3$.
base weight = Average weight of the micro porous polymeric matrix per surface area in $g/m^2$
thickness = Average thickness of the micro porous polymeric matrix in $\mu m$

In case of the membrane comprising a membrane carrier and a micro-structured polymer material consisting of different materials for the density $\rho$ the average density calculated with equation (II) is used:

$$\rho = \frac{W1 + W2}{\dfrac{W1}{\rho 1} + \dfrac{W2}{\rho 2}} \times 100\%$$  (II)

Wherein

W1 = the weight % of the membrane carrier, relative to the total weight of the membrane,
W2 = the weight % of the micro-structured polymer material, relative to the total weight of the membrane,
$\rho 1$ = Density of the membrane carrier matrix in $g/cm^3$.
$\rho 2$ = Density of the micro-structured polymer material matrix in $g/cm^3$.

Base weight

The base weight (BW) is calculated using the following equation:

$$BW = \frac{mass}{A}$$  (III)

wherein,

BW = base weight or total mass per surface area in $g/m^2$.
Mass = mass of the sample in gram.
A = surface area of the sample in $m^2$.

Base weight calculations can be based on a sample size of 100 x 100 mm or the total surface of a roll (total length x width)

Thickness

Is measured according to ISO4593 through a calibrated mechanical thickness scanner; type Millitron 1234-IC. The thickness scanner has a lower plane surface and an upper plane-measuring surface with a diameter of 11.3 mm (100 mm²) parallel to the lower surface. The total load on the measuring foot, type Mahr P2004MA, is 0.75 N.

Materials

PE membrane Solupor16P25A (ex DSM, The Netherlands), base weight of 15.2 $g/m^2$; thickness 140 $\mu m$; calculated porosity around 90 volume %.

PA-4,6          Polyamide-46, viscosity number 160 ml/g (DSM The Netherlands)

Polymer solution

A solution of 0.5 wt.%, respectively 1 wt.% of PA-4,6 in methanol saturated with $CaCl_2$ (about 9.7 wt.%) was prepared at room temperature.

Membrane modification.

Pieces of the PE membrane were briefly (just a few seconds) immersed into the polymer solution, directly dipped into water, rinsed with plenty of water, and air dried.
The modified membrane resulting from the 1 wt.% PA-4,6 solution had a base weight of 17.62 $g/m^2$, corresponding with 14.5 wt.% of PA-4,6 relative to the total weight of the modified membrane.

Microscopic inspection of the modified membrane.

The modified membranes according to the invention were inspected by SEM spectroscopy and compared with the starting membrane carrier. The thickness of the membranes were slightly reduced. The porosity was estimated to be around 85 volume %. The open surface pore structure with relatively large pores of the PE membrane had disappeared and a micro-structure with very thin fibres and film layers with a considerably reduced pore size was visible.

Properties

Mechanical properties

The mechanical properties (tensile modulus (E') [in MPa], tensile strength at break (F) [in N], and elongation at break (dL) [in %]) were measured in a tensile test according to ISO 527 at 23°C. Results are collected in Table 1.

Table 1. Mechanical properties.

| Membrane / treatment | F [N] | E' [MPa] | dL [%] |
|---|---|---|---|
| PE-membrane | 10.7 | 5.3 | 19.9 |
| Modified membrane 0.5 % solution | 13.8 | 9.3 | 21.2 |
| Modified membrane 1% solution | 13.2 | 9.5 | 21.4 |

The mechanical strength and stiffness of the membranes has significantly increased by the modification according to the invention.

Water Flux and pore size.

The water flux of the PE membrane, as well as of the modified membrane, as such and after 3 days treatment at room temperature in a cleaning agent, were measured at 0.5 bar across membrane. The average pore size was measured with the method described above. The results are collected in Table 2.

Table 2. Water Flux and Gurley number

| Membrane / treatment | Water flux l/($m^2$.h.bar) | Gurley (s/50ml) | Pore size $\mu$m |
|---|---|---|---|
| PE-membrane | 0 | 3 | 0.59 |
| Modified membrane 1% solution | 9241 | 9.7 | 0.18 |
| Id. 1% NaOCL | 9241 | 13.5 | 0.13 |
| Id. 2% KOH | 7743 | 14.6 | 0.12 |
| Id. 2% H3PO3 | 8185 | 14.6 | 0.12 |

The modified membrane possessed excellent combination of small pore size and large water flux, and had excellent resistance against cleaning agents.

Thermal properties.

For measurement of the thermal properties modified membranes were made starting from different PE membranes, designated as PE-1, PE-2 and PE-3, and modified with a 1% PA solution wherein:

PE-1 = Solupor16P25A, (ex DSM, The Netherlands), base weight of 15.2 g/m$^2$; thickness 140 $\mu$m; calculated porosity around 90 volume %.
PE-2 = Solupor16P10A
PE-3 = Solupor14P02E

For PE-1 and the modified membrane based thereupon were the same as described above. For the modification of PE-2 and PE-3 the same 1% PA solution and same method for the modification was applied.

Circular pieces with a cross section of 5 mm of the different PE membranes and the modified membranes based thereupon were cut from the membranes and subjected to a temperature of 120°C for 120 minutes. After cooling the shrinkage of the pieces were measured. The results have been collected in Table 3.

Table 3. Shrinkage values of modified PE membranes according to the invention and comparative results for non-modified PE membranes.

|  | PE membrane | | PE membrane modified with 1% PA solution | |
|---|---|---|---|---|
|  | X-direction [mm] | Y-direction [mm] | X-direction [mm] | Y-direction [mm] |
| PE-1 16P25A | 10.1 | 5.8 | 5.8 | 4.0 |
| PE-2 16P10A | 15.5 | 4.0 | 7.5 | 2.8 |
| PE-3 14P02E | 30.9 | 16.9 | 14.6 | 9.9 |
|  | X-direction [%] | Y-direction [% | X-direction [%] | Y-direction [%] |
| PE-1 16P25A | 20 | 12 | 12 | 8 |
| PE-2 16P10A | 31 | 8 | 15 | 5 |
| PE-3 14P02E | 62 | 34 | 29 | 20 |

As can be seen from these results, the modified membranes had retained their original shape much better and shrunken much less than the corresponding non-modified PE membranes.

**Claims**

1. Method for modifying a porous membrane, comprising steps wherein

   (i) a porous membrane carrier (A) having an open pore structure is impregnated with a solution (X) comprising a polymer (B-1) in a solvent (X-1) in which the polymer (B-1) is soluble, thus forming a porous membrane carrier impregnated with the polymer solution (X), and
   (ii) at least part of the polymer (B-1) comprised by the impregnated solution is precipitated from the solution by quenching with a liquid (Y) comprising a non-solvent (Y-1) for said polymer.

2. Method according to claim 1, used for reducing the average pore size and/or increasing the hydrophilicity of the porous membrane carrier.

3. Method according to claim 1 or 2, wherein

   (a) the porous membrane carrier is made of a material (A-1) comprising a polymer chosen from the group (a) consisting of polyolefins, halogenated vinyl polymers, polyacrylonitriles (PAN), polysulphones (PS), polyimides (PI), polycarbonates (PC), and cellulose and derivatives thereof, or any combination or blend thereof, and/or
   (b) the polymer (B-1) comprises a soluble polymer chosen from the group (b) consisting of PEEK, PI, PS, PC, polybenzimidazoles (PBI), polyesters, polyamides, thermoplastic elastomers (TPE), polyurea, polyurethanes (PU), natural polymers, or a combination or blend thereof.

4. Process for preparing a micro-porous membrane, comprising the steps of
(i) contacting a porous membrane carrier (A) having an open pore structure, with a solution (X) comprising a polymer (B-1), a solvent (X-1) in which the polymer is soluble, and optionally at least one additional component, such that the solution X penetrates into the pore structure of the porous membrane carrier, and
(ii) contacting the porous membrane carrier with the penetrated solution X obtained from step (i) with a liquid (Y) comprising a non-solvent (Y-1) for said polymer (B-1), thereby precipitating at least part of the polymer.

5. Process according to claim 4, wherein the solvent X-1 comprises a polar organic solvent and optionally a salt, and non-solvent Y-1 comprises water or mixtures of water and alcohol.

6. Micro-porous membrane comprising a porous membrane carrier (A) and a polymeric material (B) intimately divided throughout the porous membrane carrier, wherein the polymeric material comprises a polycondensation polymer.

7. Micro-porous membrane according to claim 6, obtainable by the method or process according to any of claims 1-5.

8. Micro-porous membrane according to claim 6 or 7, wherein the porous membrane carrier (A) consists of a material (A-1) comprising a polymer chosen from the group (a) of claim 5, and/or the polymer composition comprises at least one polymer (B-1) chosen from the group (b) of claim 5.

9. Micro-porous membrane according to any of claims 6-8, wherein the membrane carrier material (A-1) consists of a hydrophobic material, preferably a a polyolefin and/or a halogenated vinyl polymer, and the micro-porous membrane is a hydrophilic membrane, and polymer (B-1) preferably comprises a polyamide or cellulose.

10. Micro-porous membrane according to any of claims 6-9, wherein the porous membrane carrier (A) has pores with an average pore size of 0.01 - 10 $\mu$m and a porosity of at least 80 volume %, relative to the total volume of the membrane carrier, and the micro-porous membrane has an average pore size of 1 nm - 1 $\mu$m and a porosity of at least 60 volume %, relative to the total volume of the micro-porous membrane, and wherein the average pore size is obtained from the calculation wherein the number 1,77 is dived by the Gurley number measured according to ISO 5636-5 and expressed in s/50ml.

11. Micro-porous membrane according to any of claims 6-10, wherein the micro-porous membrane has an average pore size in the range of 0.01 - 1.0 $\mu$m and a pure water flux of a least 3000 l/m$^2$.h.bar, measured at 0.5 bar based on dead-end measurements, and wherein the average pore size is obtained from the calculation wherein the number 1,77 is dived by the Gurley number measured according to ISO 5636-5 and expressed in s/50ml.

12. Micro-porous membrane according to any of claims 6-11, wherein the polymeric material (B) comprises at least one additive chosen from the group consisting of whiskers, nano-size active carbon, enzymes, pharmaceuticals, nutraceuticals, and ion exchange resins, pigments, antibacterial, and stabilizers, such as thermal and oxidation stabilizers.

13. Membrane construction comprising a thin micro-porous membrane film, optionally folded, wound and / or supported by a support layer, and/or a hollow membrane fibre, or a bundle of multiple hollow membrane fibers, wherein thin micro-porous membrane film, respectively the hollow membrane fibre or fibers, consist of a micro-porous membrane according to any one of claims 6-12.

14. Use of a membrane according to any of claims 6-12 or obtained by a process or method according to any one of claims 1-5 for any one of the following applications: molecular separations and filtration, like gas/gas filtration, particle filtration, micro filtration, ultra filtration, nano filtration, reverse osmosis; waste water purification; electrochemical applications, including electro-dialysis, electro-deionization, batteries and fuel cells; controlled release applications including pharmaceutical and nutraceutical components; pertraction, pervaporation and contactor applications; Immobilization of enzymes, and humidifiers.

15. A separation process wherein a membrane construction according to claim 13 is used.

16. A polymer solution comprising an alcohol, 0.1-30 wt.% water, 1-50 wt.% of a salt, and 0.1-10 wt.% of a polyamide with a weight average molar mass of 2 - 100 kg/mol, wherein the weight percentages (wt.%) are relative to the total weight of the polymer solution.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4346142 A
- US 5085775 A
- US 5294346 A
- US 4525374 A
- US 4839296 A
- EP 175322 A
- US 4618533 A
- US 7067058 B
- EP 0495550 A2
- US 4298002 A
- US 4908236 A
- US 4113912 A

- US 4917773 A
- US 4506035 A
- US 3390067 A
- EP 245000 A
- US 4734112 A
- EP 407900 A
- EP 456939 A
- EP 408378 A
- EP 436720 A
- DE 280257
- DE 280258
- EP 1233036 A1

**Non-patent literature cited in the description**

- **M. S. SHOICHET ; T. J. MCCARTHY.** *Polymer Preprints,* 1990, vol. 31, 1
- **E.-S. A. HEGAZY ; N. N. TAHER ; A. R. EBAID.** *J. Appl. Polym. Sci.,* 1990, vol. 26, 2637

- **MATHIAS ULBRICHT.** Advanced functional polymer membranes. *Polymer,* 2006, vol. 47, 2217-2262
- **C. LHOMMEAU et al.** *Journal of Material Science: Materials in Medicine,* 1997, vol. 8, 163-174